# EUROPEAN PATENT SPECIFICATION

(11) **EP 3 674 077 B1**
(45) Date of publication and mention of the grant of the patent: **13.07.2022**
(21) Application number: 19208276.6
(22) Date of filing: 11.11.2019
(51) Int. Cl.: B32B 5/26, B32B 7/02, B32B 7/12, B32B 7/14

(54) **COMPOSITE STRUCTURES WITH DISCONTINOUS BOND LINES**
VERBUNDSTRUKTUREN MIT DISKONTINUIERLICHEN VERBINDUNGSLINIEN
STRUCTURES COMPOSITES AYANT DES LIGNES DE LIAISON DISCONTINUES

(30) Priority: 20.12.2018 US 201816228236
(43) Date of publication of application: 01.07.2020
(73) Proprietor: Aurora Flight Sciences Corporation, Manassas, VA 20110 (US)
(72) Inventor: FUENTES, Francisco J, Manassas Virginia 20110 (US); ROGERS, David W, Jr., Manassas Virginia 20110 (US); SENARATNE, Tholaka, Manassas Virginia 20110 (US)
(74) Representative: Boult Wade Tennant LLP

(56) References cited:
- EP-A2- 1 138 475
- US-A1- 2012 244 769

## Description

### FIELD

The present disclosure relates generally to systems and methods for bonding composite structures. More particularly, the disclosure relates to systems and methods for intermittent or discontinuous bond lines of secondary adhesive bonds to inhibit dis-bond propagation in bonded composite structures, such as composite aircraft structural members. The result is improved durability and damage tolerance (D&DT) for the aircraft structural member.

### BACKGROUND

Modern aerial vehicles increasingly rely on composite structures, as an alternative to heavier steel and weaker polymer materials. Aircraft components and surfaces are subject to in-flight loading that generate stresses and strains on various structural components. Moreover, environmental factors can cause additional damage over time, such as extreme heat and cold temperature swings, humidity, salt damage associated with marine environments, and contamination by aircraft fluids *(i.e.,* fuel, oil, hydraulic fluid, de-icing fluid, cleaning chemicals, toilet residue, galley spillage, etc.).

In aviation, weight is a crucial factor and, as new military and civilian aircraft systems are developed, composite materials have become increasingly relied upon for the structural makeup of aircraft. Similarly, for new military and civilian aircraft platforms, there is a continuous drive to simultaneously improve performance while reducing costs. However, joints and bonds must be able to withstand the extreme conditions and stresses experienced during flight.

Thus, what is needed is an economical, lightweight, and durable structure to incorporate into an aircraft.

US 2012/244769, in accordance with its abstract, states a method of producing composites useful for the formation of armor and armor sub-assembly intermediates. More particularly, improved ballistic resistant composites and a method for the production of ballistic resistant composites and armor sub-assembly intermediates from composites that have resin-poor surfaces resulting from the non-uniform impregnation polymeric binder materials in fiber layers.

EP 1 138 475, in accordance with its abstract, states a composite sheet having a layer of inelastically stretchable continuous fibers improved so that a possible unevenness in fiber diameter may be minimized. A composite sheet comprises an elastically stretchable layer and an inelastically stretchable layer formed with inelastically stretchable continuous fibers bonded to at least one surface of the elastically stretchable layer intermittently in one direction. The continuous fibers are oriented substantially in one direction thereof so that the composite sheet may present a ratio S1/S2 of 3.0 or higher where S3 represents a tensile strength in this one direction and S2 represents a tensile strength in the direction orthogonal to this one direction.

### SUMMARY

There is herein described a multi-layer composite structure comprising a first composite fiber layer, a second composite fiber layer, and a bonding agent disposed between the first and second composite fiber layers. The bonding agent forms a first bond and a second bond between the first composite fiber layer and the second composite fiber layer. The first and second bonds are separated from one another by a gap. The gap isolates dis-bonding of the first bond from propagating to the second bond. The bonding agent forms a fillet profile at interfacial regions between the first and second composite fiber layers.

There is also herein described a method of forming a multi-layer composite structure, comprising (a) preparing a first surface of a first composite fiber layer for bonding, (b) preparing a second surface of a second composite fiber layer for bonding, (c) applying a bonding agent as a first bond to the first surface or the second surface, (d) applying further bonding agent as a second bond to the first surface or the second surface, and (e) bonding the first composite fiber layer and the second composite fiber layer by contacting the first bond and the second bond to each of the first surface and the second surface. The first and second bonds are separated by a gap configured to isolate dis-bonding of the first bond from propagating to the second bond. The bonding agent forms a fillet profile at interfacial regions between the first and second composite fiber layers.

The present disclosure provides a multi-layer composite structure designed to mitigate the occurrence and/or propagation of dis-bonding between composite laminates. In particular, the multi-layer composite structure employs a bonding agent arranged in an intermittent bonding pattern configured to arrest propagation of fractures from spreading between isolated bonding agents.

According to a first example, a multi-layer composite structure comprises: a first composite fiber layer; a second composite fiber layer; and a bonding agent disposed between the first and second composite fiber layers, wherein the bonding agent forms a first bond and a second bond between the first composite fiber layer and the second composite fiber layer, the first and second bonds being separated from one another by a gap, and wherein the gap isolates dis-bonding of the first bond from propagating to the second bond, wherein the bonding agent forms a fillet profile at interfacial regions between the first and second composite fiber layers.

In certain examples, the gap is air filled.

In certain examples, the gap comprises a non-adhesive material.

In certain examples, the first composite layer and the second composite layer comprise a woven fiber material.

In certain examples, the separation at the interfacial region delaminates the first composite layer from the second composite layer.

In certain examples, the first bond defines a first strip and the second bond defines a second strip, which may be parallel to one another.

In certain examples, the first bond and the second bond have equal widths.

In certain examples, the first bond and the second bond have unequal widths.

In certain examples, the multi-layer composite structure further comprises a third bond, wherein the third bond is separated from the second bond by a second gap.

In certain examples, the gap has a first gap width and the second gap has a second gap width different from the first gap width.

In certain examples, the third strip is parallel to the second strip.

In certain examples, the first, second, and third bonds have equal widths.

In certain examples, the first, second, and third bonds each have unequal widths.

In certain examples, the gap has a width that is 20-25% or approximately 20-25% of a width of the first bond or the second bond.

In certain examples, the gap width is 0.75 to 1.25 inches (1.9 to 3.2 cm), or approximately 0.75 to 1.25 inches (1.9 to 3.2 cm), and the width of the first bond or the second bond is 4 to 6 inches (10 to 15 cm) or approximately 4 to 6 inches (10 to 15 cm).

In certain examples, one of the first bond or the second bond defines a square, a circular, or a triangular shape.

In certain examples, the multi-layer composite structure is a component of an aerial vehicle.

According to another example, a method of forming a multi-layer composite structure comprises: preparing a first surface of a first composite fiber layer for bonding; preparing a second surface of a second composite fiber layer for bonding; applying a bonding agent as a first bond to the first surface or the second surface; applying a bonding agent as a second bond to the first surface or the second surface; and bonding the first composite fiber layer and the second composite fiber layer by contacting the first bond and the second bond to each of the first surface and the second surface, wherein the first and second bonds are arranged to be separated by a gap configured to isolate dis-bonding of the first bond from propagating to the second bond, wherein the bonding agent forms a fillet profile at interfacial regions between the first and second composite fiber layers.

In certain examples, the method further comprises forming the first bond and the second bond in parallel strips between the first and second composite layers.

In certain examples, the gap has a width 20-25% or approximately 20-25% the width of the first bond or the second bond.

In certain examples, the gap width is 0.75 to 1.25 inches (1.9 to 3.2 cm) or approximately 0.75 to 1.25 inches (1.9 to 3.2 cm), and the width of the first bond or the second bond is 4 to 6 inches (10 to 15 cm) or approximately 4 to 6 inches (10 to 15 cm).

In certain examples, the multi-layer composite structure is formed for incorporation into an aircraft structure.

In certain examples, the first bond and the second bond have equal widths.

In certain examples, the first bond and the second bond have unequal widths.

In certain examples, the method further comprises the step of applying a bonding agent as a third bond to the first surface or the second surface prior to the step of bonding the first composite layer and the second composite layer.

In certain examples, the third bond is separated from the second bond by a second gap.

In certain examples, the gap has a first gap width and the second gap has a second gap width different from the first gap width.

In certain examples, the first, second, and third bonds have equal widths.

In certain examples, the first, second, and third bonds each have unequal widths.

In certain examples, one of the first bond or the second bond defines a square, a circular, or a triangular shape.

### DESCRIPTION OF THE DRAWINGS

The foregoing and other objects, features, and advantages of the devices, systems, and methods described herein will be apparent from the following description of particular examplesthereof, as illustrated in the accompanying figures, where like reference numbers refer to like structures. The figures are not necessarily to scale, emphasis instead is being placed upon illustrating the principles of the devices, systems, and methods described herein.
Figures 1a and 1b illustrate an example multi-layer composite structure.
Figures 2a through 2c illustrate a conventional multi-layer composite structure.
Figures 3a through 3c illustrate another conventional multi-layer composite structure.
Figures 4a and 4b illustrate another example multi-layer composite structure.
Figures 5a through 5c illustrate example bonding patterns for bonds of an example multi-layer composite structures.
Figure 6 illustrates a method of forming a multi-layer composite structure.
Figures 7a and 7b illustrate an example fixed-wing aerial vehicle.

### DESCRIPTION

The present disclosure is directed to systems and methods of a bonded multi-layer composite structure that employs a bonding agent that is arranged to form bonds having an intermittent bonding pattern. More particularly, the arrangement of the bonding pattern is configured to mitigate fracture between the bonds of the bonding agent and an adjacent layer (*e.g.,* at interfacial regions between layers). Thus, the bonding pattern mitigates the potential for dis-bonding of bonded laminates of the multi-layer composite structure by separating the individual bonds via zones. The zones (e.g., separations or gaps) discourage straight fracture of the bonded materials at the interfacial regions between layers by mitigating risk of dis-bond propagation to adjacent bonds.

Examples of the present disclosure will be described herein below with reference to the accompanying drawings. The components in the drawings are not necessarily drawn to scale, the emphasis instead being placed upon clearly illustrating the principles of the present examples. For instance, the size of an element may be exaggerated for clarity and convenience of description. Moreover, wherever possible, the same reference numbers are used throughout the drawings to refer to the same or like elements of an example. In the following description, well-known functions or constructions are not described in detail because they may obscure the disclosure in unnecessary detail. No language in the specification should be construed as indicating any unclaimed element as essential to the practice of the examples.

Recitation of ranges of values herein are not intended to be limiting, referring instead individually to any and all values falling within the range, unless otherwise indicated herein, and each separate value within such a range is incorporated into the specification as if it were individually recited herein. The words "about," "approximately," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the described examples. The use of any examples, or exemplary language ("*e.g*.," "such as," or the like) provided herein, is intended merely to better illuminate the present disclosure and does not pose a limitation on the scope of the present disclosure. No language in the specification should be construed as indicating any unclaimed element as essential to the practice of the examples.

In the following description, it is understood that terms such as "first," "second," "top," "bottom," "side," "front," "back," and the like, are words of convenience and are not to be construed as limiting terms. The various data values (e.g., dimensions, measurements, time durations, etc.) provided herein may be substituted with one or more other predetermined data values and, therefore, should not be viewed limiting, but rather, exemplary. For this disclosure, the following terms and definitions shall apply:
The term "composite," "composite material" or "composite structure," as used herein, refers to a material comprising an additive material and a matrix material. For example, a composite material may comprise a fibrous additive material (e.g., fiberglass, glass fiber ("GF"), carbon fiber ("CF"), aramid/para-aramid synthetic fibers, FML, etc.) and a matrix material (e.g., epoxies, polyimides, aluminum, titanium, and alumina, including, without limitation, plastic resin, polyester resin, polycarbonate resin, casting resin, polymer resin, thermoplastic, acrylic resin, chemical resin, and dry resin). Further, composite materials may comprise specific fibers embedded in the matrix material, while hybrid composite materials may be achieved via the addition of some complementary materials (e.g., two or more fiber materials) to the basic fiber/epoxy matrix.

The term "composite laminates" or "composite layers" as used herein, refers to a type of composite material assembled from layers (*i*.*e*., a "ply") of additive material and a matrix material. For example, layers of additive material, such as fibrous composite materials, may be joined to provide desired engineering properties, including in-plane stiffness, bending stiffness, strength, and coefficient of thermal expansion. Layers of different materials may be used, resulting in a hybrid laminate. The individual layers may be orthotropic *(i.e.,* principal properties in orthogonal directions) or transversely isotropic (*i*.*e*., isotropic properties in the transverse plane) with the laminate then exhibiting anisotropic *(i.e.,* variable direction of principal properties), orthotropic, or quasi-isotropic properties. Quasi-isotropic laminates exhibit isotropic *(i.e.,* independent of direction) in-plane response but are not restricted to isotropic out-of-plane (bending) response. Depending upon the stacking sequence of the individual layers, the laminate may exhibit coupling between in-plane and out-of-plane response. An example of bending-stretching coupling is the presence of curvature developing as a result of in-plane loading.

The term "composite structure" as used herein, refers to structures, or components, fabricated, at least in part, using a composite material, including, without limitation, composite laminates and composite layers.

The terms "coupled," "coupled to," and "coupled with" as used herein, each mean a relationship between or among two or more devices, apparatuses, files, circuits, elements, functions, operations, processes, programs, media, components, networks, systems, subsystems, and/or means, constituting any one or more of: (i) a connection, whether direct or through one or more other devices, apparatuses, files, circuits, elements, functions, operations, processes, programs, media, components, networks, systems, subsystems, or means; (ii) a communications relationship, whether direct or through one or more other devices, apparatuses, files, circuits, elements, functions, operations, processes, programs, media, components, networks, systems, subsystems, or means; and/or (iii) a functional relationship in which the operation of any one or more devices, apparatuses, files, circuits, elements, functions, operations, processes, programs, media, components, networks, systems, subsystems, or means depends, in whole or in part, on the operation of any one or more others thereof.

The term "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

The term "exemplary" means "serving as an example, instance, or illustration". The examples described herein are not limiting, but rather are exemplary only. It should be understood that the described examples are not necessarily to be construed as preferred or advantageous over other examples.

Increasingly, multi-layer composite materials and structures are being employed in aircraft construction, where dis-bond is a primary air safety concern. For example, aircraft, satellites, and other critical machines require a high degree of confidence in composite structures to ensure airworthiness. As discussed above, however, conventional material bonding can suffer from a number of drawbacks. There can be, for example, stresses at an interface between composite materials. Accordingly, an object of the present disclosure is to implement a lightweight, robust bond between composite materials that mitigates dis-bond propagation.

The static and structural performance *(i.e.,* Durability and Damage Tolerance (D&DT)) of secondary adhesive joints in primary multi-layer composite structure is affected by the capability of the adhesives, bonded base material, and surface preparation. As will be discussed, a primary adhesive bond is one that forms a structure (e.g., a substrate, layer, etc.), whereas the secondary adhesive joint serves to bind (or otherwise join) multiple structures together.

Although the capability (e.g., strength, durability) of the adhesive itself is comparable to positive fastening methods (e.g., mechanical fasteners, such as bolts, rivets, etc., with a positive locking to positively lock the fastener, thereby preventing loosening), secondary adhesive bonded only joints are subject to defects, such as dis-bonding, and therefore may not satisfy current airworthiness requirements for primary structures. Generally speaking, a delamination is failure in a laminated material, often between layers of a composite, which leads to separation of the composite layers *(i.e.,* substrates or plies). Delamination failure can be of several types, such as a fracture within the adhesive or resin, a fracture within the reinforcement, or de-bonding of the resin from the reinforcement. Whereas dis-bonding occurs when a laminated material (e.g., bonded layers of a multi-layer composite structure) becomes separated from a bonding agent. Such separation can be induced by issues in manufacturing, impact of the rigors of structural use, or some other factor affecting the structure (e.g., environment, age, quality of adhesive, etc.). Therefore, the weight efficiencies and design flexibilities afforded by the use of adhesive-only bonded joints are lost for certifiable airframe structures due to the lack of, and inability to assess, ongoing D&DT performance. As a result, there are currently no bonded-only primary structural joints and primary structure sized and designed for traditional positive fasteners in service in modern aircraft.

In view of the foregoing, some examples of the present disclosure provide a multi-layer bonded composite structure that employs a bonding agent that is arranged to form bonds having an intermittent bonding pattern, the arrangement of the bonding pattern configured to mitigate the possibility for fracture of layers of the bonded composite at interfacial regions between layers. The introduction of intermittent or discontinuous bond lines for secondary adhesive bonds endeavors to inhibit bond line dis-bond propagation, by isolating any weaknesses and/or shortfalls of the bond to an individual bonding element, thereby providing improved D&DT.

This technique, coupled with a design that allows for some failed bond segments, can enable construction of a certifiable bonded-only airframe structure. In particular, the intermittent or discontinuous bond lines allow for the isolation of imperfections that could occur during the manufacturing process or lifetime of the vehicle. With discrete gaps, any dis-bond that may initiate through a bonded section will terminate at the gap, thereby preventing propagation along the bond line. Additionally, the edges of a bond may exhibit a higher peel strength in part due to the formation of a fillet at the edges of the interfacial region(s) between the layers. Thus, the use of the bond pattern mitigates the potential for dis-bonding of bonded layers of a composite structure by separating individual bonds via voids. The voids (e.g., separations or gaps) discourage straight fracture of the bonded materials at the interfacial regions between layers. As a result, independent bonds are isolated from propagation of fractures that exist in other bonded regions between layers.

Some examples of the present disclosure therefore offer an economical bonding technique for fabricating a lightweight composite structure (e.g., during the fabrication of a multi-layer composite structure) and/or for embedding a composite structure on (or adhering to) the surface of a pre-fabricated composite structure. The addition of this capability provides additional structural benefits such as structural strength, stiffness, impact resistance, and durability depending on the materials selected and layup configuration of components. Accordingly, the bonding techniques disclosed herein provide increased dis-bonding-resistance/delamination resistance in a multi-layer composite structure, by, *inter alia,* providing a gap between adjacently located bonding elements within the pattern.

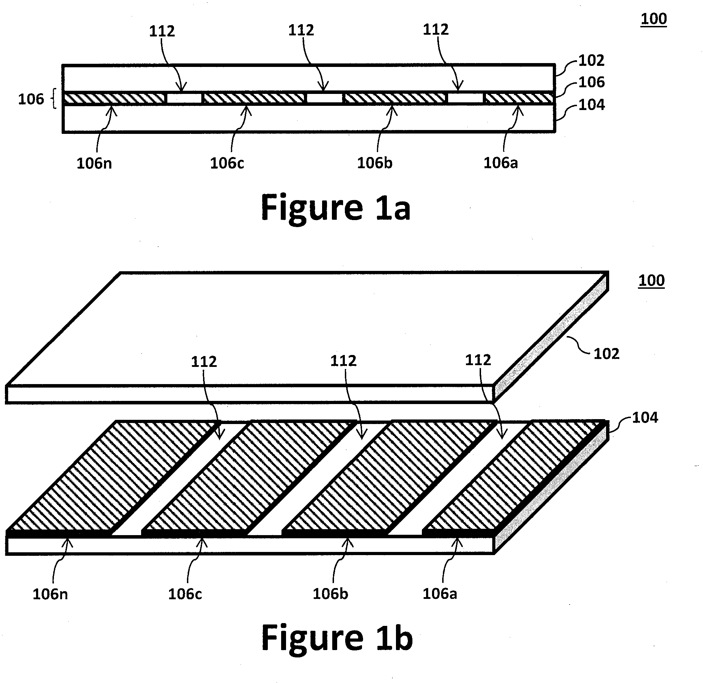

Figure 1a illustrates a lengthwise cross-sectional view of a multi-layer composite structure 100 comprising a first composite layer 102 *(e.g.,* a substrate, such as a composite fiber layer) bonded to a second composite layer 104 by a bonding agent 106 *(e.g.,* an adhesive, resin, epoxy). In the example of Figure 1a, the bonding agent 106 is arranged into strip-shaped bonds 106a, 106b, 106c, 106n (or beads) that are separated from one another by zones 112 free of a bonding agent 106. Examples of such zones 112 include gaps, voids, regions, etc. Thus, as described herein, even where a defect may cause dis-bonding at an interfacial region associated with one bond *(e.g.,* bond 106a), an adjacent bond *(e.g.,* bond 106b) is isolated from such dis-bonding via one or more zones 112 such that the adjacent bond remains intact/structurally sound. In other words, isolating a first bond 106a from a second bond 106b *(e.g.,* an adjacent bond, as illustrated) via one or more zones 112 mitigates the risk dis-bonding at a first bond 106a from propagating to the adjacent bond, in this case the second bond 106; thereby maintaining the integrity of the adjacent bond.

To fabricate the multi-layer composite structure 100, a bonding agent 106 may be applied to a surface of one or both of the first and second layers 102, 104 to form bonds. The bonding agent 106 may be applied to form bonds of different sizes and/or dimensions at different locations. For example, as illustrated in Figures 1a and 1b, the bonding agent 106 may be applied to form a first bond 106a, a second bond 106b, a third bond 106c, .... an nth bond 106n, which may be strip-shaped. The first and second layers 102, 104 can then be forced together (e.g., using weight/pressure) and bonded with the bonding agent 106 positioned therebetween. Once the bonding agent 106 at each bond cures, the first and second layers 102, 104 are bonded to yield the multi-layer composite structure 100. The zones 112 may be air-filled and or filled with a non-adhesive material or vacuumed. This may be done to remove tolerance between the layers and/or prevent unintended debris, moisture, etc., from migrating into the zones 112. In certain examples, the zones 112 may be used to house conductors (e.g., electrical conductors to convey electrical power) or to pass fluid *(e.g.,* air/gas). Alternatively, zone 112 may be occupied by a bonding agent distinct *(e.g.,* a different type of bonding agent) from bonding agent 116.

The composite layers 102, 104 may be, for example, a dry composite material, carbon pre-impregnated resin systems ("pre-preg", *i.e.,* composite fibers having uncured matrix material already present), or any other suitable composite material ply. Therefore, in at least one example, the composite layers 102, 104 may be composite fiber layers. While two structural layers 102, 104 are illustrated, one of skill in the art would appreciate that additional layers may be employed as desired for a particular application. Thus, the use of two layers 102, 104 is merely illustrative and the present disclosure should not be construed as limited to a multi-layer composite structure having only two layers.

In some examples, the multi-layer composite structure 100 may be co-cured *(e.g.,* the layers create the composite structure as the layers are built up and cured together), and/or co-bonded *(e.g.,* additional layers are bonded to a pre-fabricated structure, *e.g.,* with a resin or other adhesive) with another composite structure (e.g., an existing or pre-manufactured composite piece of an aircraft, for example).

Figure 1b illustrates a view of the first composite layer 102 prior to bonding to the second composite layer 104 by bonding agent 106. As shown, the bonding agent 106 has been applied in a strip-shaped pattern of bonds 106a, 106b, 106c, 106n that defines discrete zones 112 where the bonding agent 106 is absent/omitted. As shown, the bonding agent 106 can be applied in strips spanning the length of layer 104, but can be applied in any suitable pattern that provides sufficient bonding area between layers 102, 104, while maintaining a desired number of zones 112. Further, although illustrated as applied to layer 104, bonding agent 106 can be applied to layer 102 in addition to or as alternative to layer 104.

The shape and/or width of zones 112 can vary, dependent on a variety of factors that include, without limitation, type of material of the layers 102, 104, type of bonding agent 106, surface treatments, manufacturing process, desired distance between layers 102, 104, weight, overall required strength of the multi-layer composite structure, etc. In some examples, the width of each zone 112 is 20 to 25 percent the width of the strip of bonding agent 106 *(e.g.,* a zone to agent ratio of 1:4 - 1:5, although other ratios are contemplated, including those between 1:1 and 1:10). In some examples, each zone 112 may have a width in the range of 0.5 inches to 2 inches (1.3 cm to 5 cm) whereas the width of the bonding agent 106 may be between 2 inches to 10 inches (5 cm to 25 cm). In examples, each zone 112 may have a width in the range of 0.75 inches to 1.25 inches (1.9 cm to 3.2 cm), and the width of the bonding agent 106 may be between 4 inches to 6 inches (10 cm to 15 cm).

To the extent the resultant stress is arrested at the edge of each bonding element, the disclosed bonding patterns have increased stress-bearing capacity of a multi-layer composite structure compared to conventional composites *(i.e.,* complete adhesive coverage). As disclosed herein, the increased stress-bearing capacity of multi-layer composite structure is attributable to the relationships among the respective bond elements, as well as the shape and/or orientation thereof. By designing the bonding pattern so that the next closest bond element is separated by a gap *(e.g.,* zone 112) defined by the bonding pattern, substantial stresses experienced by the multi-layer composite structure are mitigated. Thus, the amount of stress dissipated and/or absorbed at each bonding element is improved.

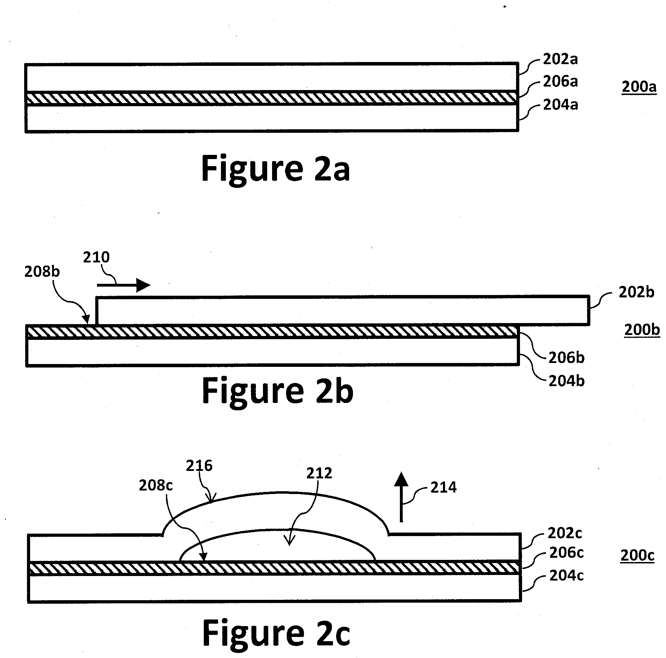

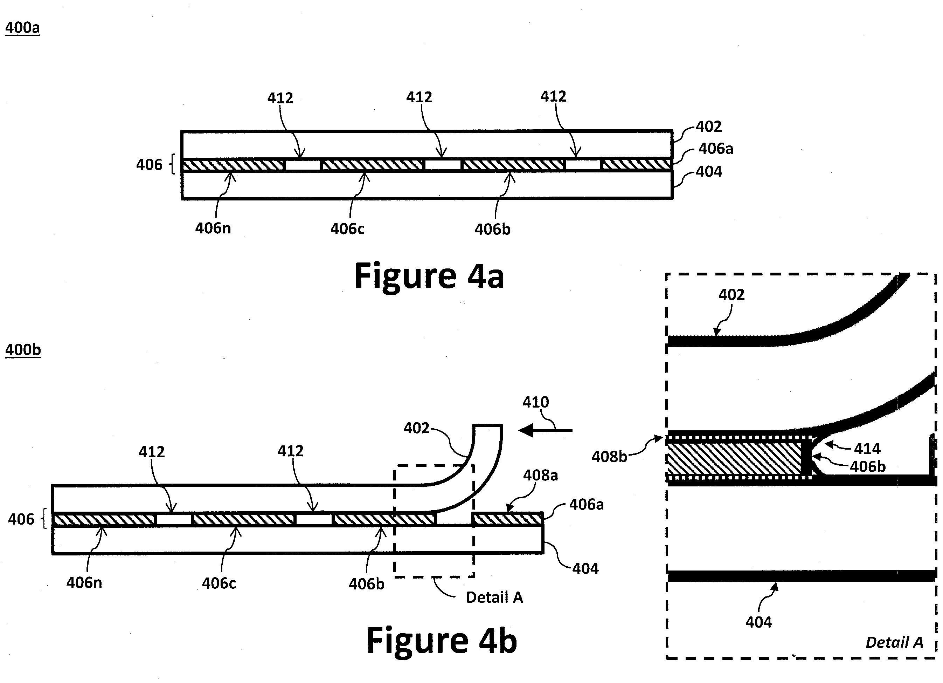

Detailed explanations of dis-bonding are described with respect to Figures 2a through 3c. Details regarding the improved multi-layer composite disclosed herein are provided with reference to Figures 4a through 6.

Figure 2a illustrates a lengthwise cross-sectional view of a conventional multi-layer structure 200a comprising a first layer 202a bonded to a second layer 204a by a sheet/layer of bonding agent 206a *(e.g.,* an adhesive bond) along the entire length between the two layers 202a, 204a. Although multi-layer structures typically result in a structure that is stronger than the sum of the individual layers, a failure in the bond can weaken or undo the multi-layer structural integrity. For example, dis-bonding and delamination are a common failure of layered materials, such as multi-layer structure 200a.

Dis-bonding at adhesively bonded interfaces can be caused by a variety of defects. For example, increased porosity at a bond can weaken the interfacial integrity between the bonding agent and a composite layer, which can be caused by gases within the bonding agent or adhesive. Voids within the bonding agent at a bond may be caused by air entrapment during application of the adhesive, or by insufficient amounts of adhesive being applied to the bonded surfaces. Improper or incorrect curing of the adhesive may occur at various locations during application as a result of contaminants or poor mixing of the adhesive's constituent parts. Further, these or other causes can result in cracks in the adhesive, following curing and thermal shrinkage during manufacture, creating brittle or weak bonds. Coupled with the stress on the bonded layers due to the constant and varied forces experienced during flight, a weak bond could fail (e.g., dis-bond).

Damage to the structure 200a can occur as a result of repeated exposure to stress or impact, causing layers 202a, 204a to separate with significant loss of mechanical toughness. Dis-bonding in adhesive bonds between layers can take on a variety of forms. Example failures in bonding, or dis-bonds, are illustrated in connection with Figures 2 through 3.

As shown in Figure 2b, a multi-layer structure 200b may comprise a first layer 202b, a second layer 202b, and bonding agent 206b. In the example of Figure 2b, dis-bonding has occurred at an interfacial region 208b between the first layer 202b and the bonding agent 206b. As shown, the first layer 202b has shifted in the direction 210 as a result of the dis-bonding. This is possible as, once an area of the bond is damaged (e.g. discontinuities), the effect may propagate along the interfacial region 208b between the bonding agent 206b and the first layer 202b. Thus, an initial break/separation at interfacial region 208b may allow the dis-bond to continue along the entire length of the interface.

Figure 2c shows another type of dis-bonding, where interfacial region 208c has delaminated from first layer 202c to cause a raised portion 216. Thus, a void 212 has been created as the first layer 202c expands in the direction 214 away from the interfacial region 208c. As a result, the void 212 could propagate along the length of the bonding agent and outwardly towards the edges.

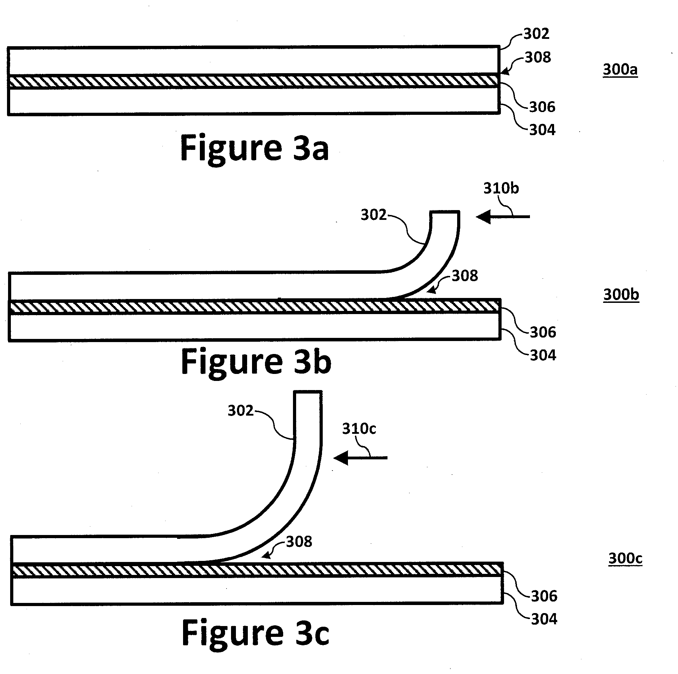

Figure 3a illustrates another length wise cross-sectional view of an example multi-layer structure 300a comprising a first layer 302 bonded to a second layer 304 by a bonding agent 306, which was formed as a continuous sheet. In the example of Figure 3a, a defect has occurred at the interfacial region 308 between the first layer 302 and the bonding agent 306. As described herein, dis-bonding tends to propagate along the interface 308, as shown in Figure 3b. Thus, the first layer 302 is shown separating from the bonding agent 306 as the dis-bonding propagates in direction 310b.

As shown in Figure 3c, propagation of the dis-bonding has continued in direction 310c, resulting in a failure of the bond between the first layer 302 and the bonding agent 306. Thus, a defect that began at a single location at the interface 308 can propagate to potentially delaminate the entire first layer 302 from the bonding agent 306.

Figures 4a and 4b illustrate an example of improved multi-layer composite structures 400a, 400b, which is similar to the multi-layer composite structures 100 described with reference to Figure 1a. As shown, the multi-layer composite structure 400a includes a first composite layer 402 bonded to a second composite layer 404 by a bonding agent 406 that is arranged into a predetermined bonding pattern. In the example of Figure 4a, however, the bonding agent 406 is arranged into strip-shaped bonds that are separated from one another by zones 412. For example, as illustrated in Figures 4a and 4b, the bonding agent 406 may be applied to form a first bond 406a, a second bond 406b, a third bond 406c, .... an nth bond 406n; each is illustrated as separated by a zone 412.

As shown in Figure 4b, a defect at a first interfacial region 408a of the first bond 406a can cause dis-bonding between the first composite layer 402 and bonding agent 406. As best illustrated in Detail A of Figure 4b, as the first composite layer 402 peels back in the direction 410, the second bond 406b at a second interfacial region 408b remains intact. The interfacial regions are represented via the dotted line between the composite layers 402, 404 and the bond 406b formed from bonding agent 406. The increased strength at the interfacial region can be attributed at least in part to the fillet 414 formed along the length of the edges of the upper and lower interfacial regions between the bond 406b and the composite layers 402, 404. The fillet 414 is demonstrated, in Detail A of Figure 4b, as the bonding agent forming an overlay of contacts between the bonding agent 406 and the layers 402, 404 (i.e., interfacial regions). As illustrated in this example, the fillet 414 may form a concave profile about the edges of the bond 406b when viewed in cross-sectional view. Thus, the separation of bonding agents 406 by zones 412 arrests the propagation of defects that can cause dis-bonding of a multi-layer composite structure.

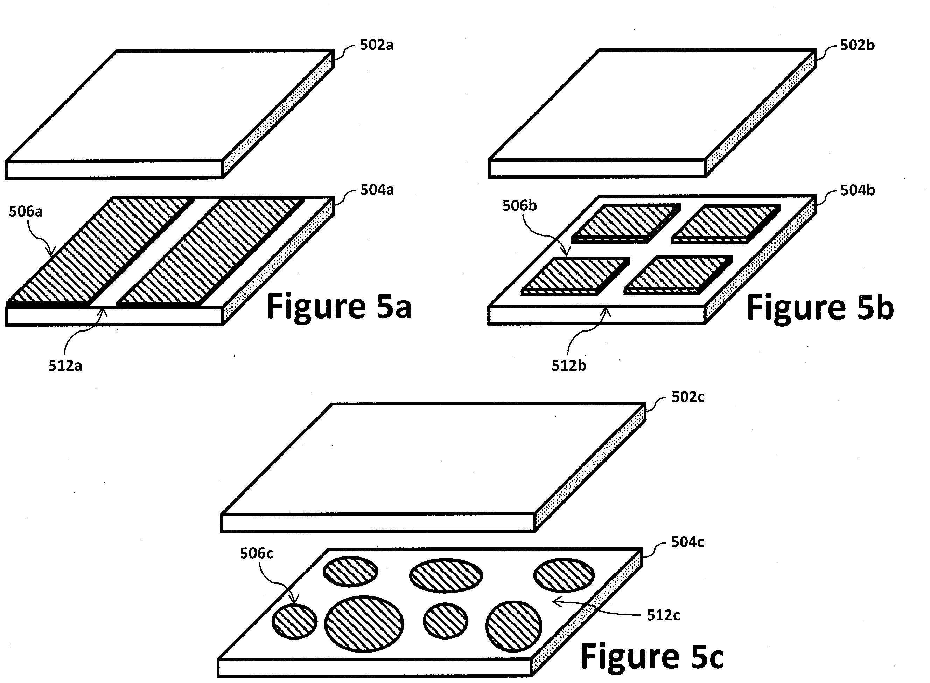

As illustrated in Figures 5a through 5c, the bonding agent may be arranged to form bonds of a variety bonding patterns (e.g., strip-shaped bonds 506a, square-shaped bonds 506b, round-shaped bonds 506c, combinations thereof, etc.) to unite sheets of the layered material along the entirety of the length, or along a portion of the length or width of each layer. The bonding agent can also be used to bond intermittent portions of layers in a particular configuration, such as defined in terms of length and/or width. The bonding agent can further be used to bond portions of various layers according to more than one configuration. The bonding agent can yet further be used to bond layers along a defined length of the material.

The bonding agent can be applied in a variety of different functional bonding patterns. The edges of each bonding element of the bond pattern are defined generally by the geometry of the individual layers and/or the desired shape of a completed multi-layer composite structure.

Thus, as shown in Figure 5a, bonding agent 506a has been applied in a pattern that creates discrete zones 512a where the bonding agent 506a is omitted. As shown, the bonding agent 506a is applied in strips spanning the length of layer 504a, but can be applied in any suitable pattern that provides sufficient bonding area between layers 502a and 504a, while maintaining zones 512a.

By designing the bonding pattern so that the adjacent (next closest) bond is separated by a gap defined by the bonding pattern, substantial portions of stress experienced by the multi-layer composite structure are mitigated. Thus, the amount of stress dissipated and/or absorbed at each bonding element is improved.

Moreover, while several figures have been described using elongate bonding elements *(e.g.,* 506a of Figure 5a), square bonding elements 506b, and circular bonding elements 506c, as shown in Figures 5b and 5c, respectively, can be used in the bond pattern so long as the number and placement of such circular bond elements are consistent with the principles taught herein for preventing dis-bonding from propagating to other bonds within the bonding pattern.

Such spacing of the bonding elements from each other provides for distribution of stresses across each layer to a plurality of bonding elements, thereby enhancing distribution of the stress over a relatively larger number of bond elements, as well as over a relatively larger area of the material being bonded, while maintaining the dis-bonding preventive structure disclosed herein.

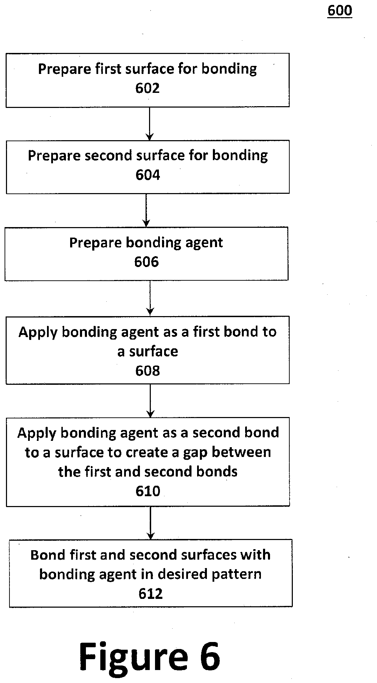

Figure 6 illustrates a method 600 of forming a multi-layer composite structure, such as the multi-layer composite structures disclosed with respect to Figures 4a through 5c. In block 602, a surface of a first composite fiber layer *(e.g.,* a first substrate) may be prepared for bonding. For example, the preparation may include etching, sanding, or otherwise mechanically modifying a property of the surface, such as with sodium ammonia or sodium naphthalene, so as to facilitate adhesion of the layers using bonding agents, adhesives, commercial-grade epoxies, etc. In block 604, a surface of a second composite fiber layer may be prepared for bonding in a manner similar to that of the first composite fiber layer.

In block 606, a bonding agent may be prepared in accordance with the manufacturer's recommendation for the desired bonding agent. For example, where the bonding agent is an epoxy, a hardener (Part B) may be poured into a mixing vessel or container, followed by the resin (Part A) in a predetermined ratio proscribed by the manufacturer. The resin and hardener may then be mixed together to yield a homogenized bonding agent.

In block 608, a bonding agent may be applied as a first bond to one or both surfaces. In block 610, a bonding agent is applied as a second bond to one or both surfaces, the second bond being arranged relative to the first bond such that a gap separates the two bonds. In other words, the two bonds are isolated from one another by a void, such that discontinuities (e.g., dis-bonding) that may exist in either bond will be prevented from propagating to the other bond. For example, the bonding agent is applied in a predefined amount and arrangement (e.g., small, lengthwise beads), such that, upon compression between the first and second layers, a gap remains between the adjacent bonds.

In block 612, the first composite layer and the second composite layer may be bonded together by contacting the first surface and the second surface. For example, the two layers are adhered together, and the bonding agent is allowed to cure for a duration of time needed to bond to a strength suitable to satisfy aircraft standards.

As disclosed herein, forming the multi-layer composite structure by method 600 may include composite layers that are laid up (co-bonded or co-cured; e.g., impregnated during manufacturing of the composite structure, co-cured) with another composite material or structure and, once cured, becomes part of the composite structure *(e.g.,* a spar, wing, etc.). In some examples, the material (e.g., a liquid epoxy) used to fabricate the composite structure may also be used as a bonding agent to bond the one or more layers. Furthermore, as more composite aerial vehicles are developed, epoxy and Bis-Maleimide (BM) pre-impregnated resin systems ("pre-preg") are two suitable composite matrices for aircraft structures.

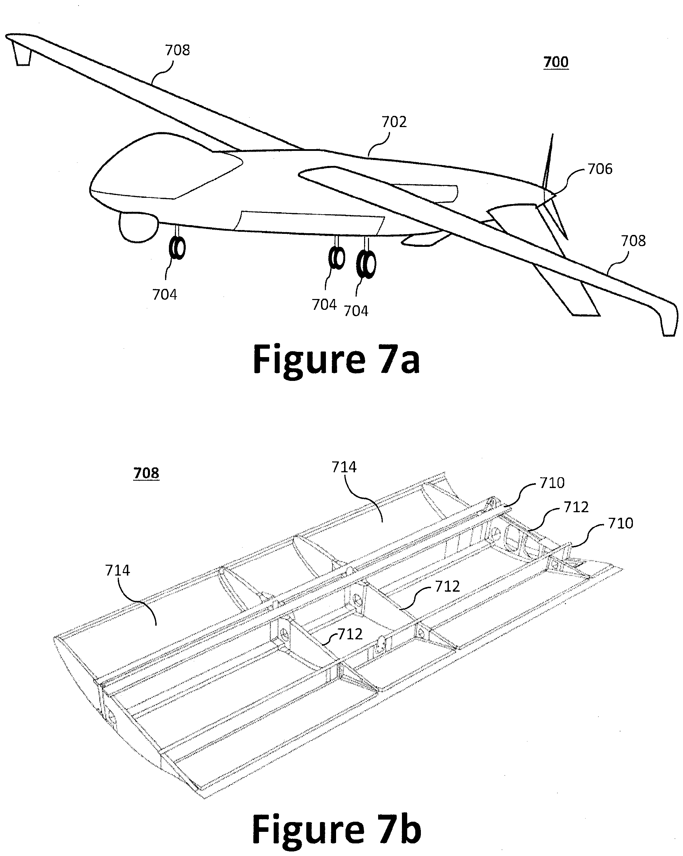

The above bonding techniques may be used to fabricate aerial vehicles, including both multirotor vertical take-off and landing (VTOL) and fixed-wing aerial vehicles. Figures 7a and 7b illustrate an example fixed-wing aerial vehicle 700. The fixed wing aircraft 700 may comprise an airframe 702 *(e.g.,* a fuselage or chassis), landing gear 704, and one or more thrust generators 706 to provide lift or thrust *(e.g.,* a turbine, a motor or engine operatively coupled with a propeller, etc.), and one or more fixed wings 708. The one or more fixed wings 708 may be coupled to the airframe 702. While the one or more fixed wings 708 are illustrated as distinct from the airframe 702, the fixed wing aircraft 700 may instead be configured as a blended-wing or flying-wing configuration, for example. Figure 7b depicts a section of an example aircraft wing 708. As illustrated, the aircraft wing 708 generally comprises spars 710 *(e.g.,* a main spar), ribs 712, and wing panels 714. One of more of the spars 710, ribs 712, and/or wing panels 714 may be fabricated as a multi-layer bonded composite structure that employs a bonding agent in an intermittent bonding pattern. Likewise, the various components (e.g., spars 710, ribs 712, and/or wing panels 714) of the aircraft wing 708 (or other component of the fixed-wing aerial vehicle 700) may be joined to one another using a bonding agent with an intermittent bonding pattern.

While the description so far has centered on use in aviation, it is clear to those of skill in the art that it can equally be applied to other vehicles and vehicular systems, including, for example, automobiles, motorcycles, trains, ships, boats, spacecraft, and aircraft.

Examples useful for understanding the disclosed embodiments:
In one example, there is a multi-layer composite structure comprising: a first composite fiber layer (102, 402); a second composite fiber layer (104, 404); and a bonding agent (106, 116, 306,406, 206a, 206b, 406) disposed between the first and second composite fiber layers (104, 404), wherein the bonding agent (106, 116, 306,406, 206a, 206b, 406) forms a first bond (106a, 406a) and a second bond (106, 106b, 406b) between the first composite fiber layer (102, 402) and the second composite fiber layer (104, 404), the first and second bonds (106a, 106b, 406b) (106, 106b, 406b) being separated from one another by a gap, and wherein the gap isolates dis-bonding of the first bond (106a, 406a) from propagating to the second bond (106, 106b, 406b), wherein the bonding agent forms a fillet profile at interfacial regions between the first and second composite fiber layers.

The dis-bonding may comprise a separation at an interfacial region between the bonding agent (106, 116, 306,406, 206a, 206b, 406) and the first composite fiber layer (102, 402).

The first bond (106a, 406a) and the second bond (106, 106b, 406b) may have unequal widths (20-25).

The multi-layer composite structure may further comprise a third bond (106c, 406c), wherein the third bond (106c, 406c) is separated from the second bond (106, 106b, 406b) by a second gap.

The gap may have a first gap width and the second gap may have a second gap width different from the first gap width.

The first, second, and third bond (106c, 406c) s (106a, 106b, 406b) may have equal widths (20-25).

The first, second, and third bond (106c, 406c) s (106a, 106b, 406b) may each have unequal widths (20-25).

One of the first bond (106a, 406a) or the second bond (106, 106b, 406b) may define a square, a circular, or a triangular shape.

The multi-layer composite structure may be a component of an aerial vehicle.

There is an aerial vehicle or an aircraft comprising the multi-layer composite structure of any of the clauses above.

In a further example, there is a method of forming a multi-layer composite structure, comprising: applying a bonding agent (106, 116, 306,406, 206a, 206b, 406) as a first bond (106a, 406a) to the first surface or the second surface; applying further bonding agent (106, 116, 306,406, 206a, 206b, 406) as a second bond (106, 106b, 406b) to the first surface or the second surface; and bonding the first composite fiber layer (102, 402) and the second composite fiber layer (104, 404) by contacting the first bond (106a, 406a) and the second bond (106, 106b, 406b) to each of the first surface and the second surface, wherein the first and second bonds (106a, 106b, 406b) (106, 106b, 406b) are arranged to be separated by a gap configured to isolate dis-bonding of the first bond (106a, 406a) from propagating to the second bond (106, 106b, 406b), wherein the bonding agent forms a fillet profile at interfacial regions between the first and second composite fiber layers.

The method may further comprise the initial steps of: preparing a first surface of a first composite fiber layer (102, 402) for bonding; and preparing a second surface of a second composite fiber layer (104, 404) for bonding.

The multi-layer composite structure may be formed for incorporation into an aircraft structure (702); or may further comprise incorporating the multi-layer composite structure into an aircraft structure (702).

The first bond (106a, 406a) and the second bond (106, 106b, 406b) may have equal widths (20-25).

The first bond (106a, 406a) and the second bond (106, 106b, 406b) may have unequal widths (20-25).

The method may further comprise the step of applying further bonding agent (106, 116, 306,406, 206a, 206b, 406) as a third bond (106c, 406c) to the first surface or the second surface prior to the step of bonding the first composite fiber layer (102, 402) and the second composite fiber layer (104, 404).

The third bond (106c, 406c) may be separated from the second bond (106, 106b, 406b) by a second gap.

The gap may have a first gap width and the second gap may have a second gap width different from the first gap width.

The first, second, and third bonds (106c, 406c) (106a, 106b, 406b) may have equal widths (20-25).

The first, second, and third bonds (106c, 406c) (106a, 106b, 406b) may each have unequal widths (20-25).

One of the first bond (106a, 406a) or the second bond (106, 106b, 406b) may define a square, a circular, or a triangular shape.

## Claims

1. A multi-layer composite structure comprising:
a first composite fiber layer (102, 402);
a second composite fiber layer (104, 404); and
a bonding agent (106, 116, 306,406, 206a, 206b, 406) disposed between the first and second composite fiber layers (104, 404),
wherein the bonding agent (106, 116, 306,406, 206a, 206b, 406) forms a first bond (106a, 406a) and a second bond (106, 106b, 406b) between the first composite fiber layer (102, 402) and the second composite fiber layer (104, 404), the first and second bonds (106a, 106b, 406b) (106, 106b, 406b) being separated from one another by a gap, and
wherein the gap isolates dis-bonding of the first bond (106a, 406a) from propagating to the second bond (106, 106b, 406b), and
wherein the bonding agent (106, 116, 306,406, 206a, 206b, 406) forms a fillet profile at interfacial regions between the first and second composite fiber layers (104, 404).

2. The multi-layer composite structure of claim 1, wherein the first bond (106a, 406a) and the second bond (106, 106b, 406b) have unequal widths (20-25).

3. The multi-layer composite structure of claim 1 or claim 2, further comprising a third bond (106c, 406c), wherein the third bond (106c, 406c) is separated from the second bond (106, 106b, 406b) by a second gap.

4. The multi-layer composite structure of claim 3, wherein the gap has a first gap width and the second gap has a second gap width different from the first gap width.

5. The multi-layer composite structure of claim 3 or claim 4, wherein the first, second, and third bonds (106a, 106b; 106, 106b, 406b; 106c, 406c) each have unequal widths (20-25).

6. The multi-layer composite structure of any of the claims above, wherein one of the first bond (106a, 406a) or the second bond (106, 106b, 406b) defines a square, a circular, or a triangular shape.

7. An aerial vehicle comprising the multi-layer composite structure of any of the claims above.

8. A method of forming a multi-layer composite structure, comprising:
preparing a first surface of a first composite fiber layer (102, 402) for bonding;
preparing a second surface of a second composite fiber layer (104, 404) for bonding;
applying a bonding agent (106, 116, 306,406, 206a, 206b, 406) as a first bond (106a, 406a) to the first surface or the second surface;
applying further bonding agent (106, 116, 306,406, 206a, 206b, 406) as a second bond (106, 106b, 406b) to the first surface or the second surface; and
bonding the first composite fiber layer (102, 402) and the second composite fiber layer (104, 404) by contacting the first bond (106a, 406a) and the second bond (106, 106b, 406b) to each of the first surface and the second surface,
wherein the first and second bonds (106a, 106b, 406b) (106, 106b, 406b) are separated by a gap configured to isolate dis-bonding of the first bond (106a, 406a) from propagating to the second bond (106, 106b, 406b), and
wherein the bonding agent (106, 116, 306,406, 206a, 206b, 406) forms a fillet profile at interfacial regions between the first and second composite fiber layers (104, 404).

9. The method of claim 8, further comprising incorporating the multi-layer composite structure into an aircraft structure (702).

10. The method of claim 8 or 9, wherein the first bond (106a, 406a) and the second bond (106, 106b, 406b) have unequal widths (20-25).

11. The method of any of claims 8 to 10, further comprising the step of applying further bonding agent (106, 116, 306,406, 206a, 206b, 406) as a third bond (106c, 406c) to the first surface or the second surface prior to the step of bonding the first composite fiber layer (102, 402) and the second composite fiber layer (104, 404).

12. The method of claim 11, wherein the third bond (106c, 406c) is separated from the second bond (106, 106b, 406b) by a second gap.

13. The method of claim 12, wherein the gap has a first gap width and the second gap has a second gap width different from the first gap width.

14. The method of claim 11, wherein the first, second, and third bonds (106a, 406a; 106, 106b, 406b; 106c, 406c) each have unequal widths (20-25).

15. The method of any of claims 8 to 14, wherein one of the first bond (106a, 406a) or the second bond (106, 106b, 406b) defines a square, a circular, or a triangular shape.

## Patentansprüche

1. Mehrschichtige Verbundstruktur, umfassend:
eine erste Verbundfaserschicht (102, 402);
eine zweite Verbundfaserschicht (104, 404); und
ein Klebemittel (106, 116, 306, 406, 206a, 206b, 406), das zwischen der ersten und der zweiten Verbundfaserschicht (104, 404) angeordnet ist,
wobei das Klebemittel (106, 116, 306, 406, 206a, 206b, 406) eine erste Klebung (106a, 406a) und eine zweite Klebung (106, 106b, 406b) zwischen der ersten Verbundfaserschicht (102, 402) und der zweiten Verbundfaserschicht (104, 404) bildet, wobei die erste und zweite Klebung (106a, 106b, 406b) durch einen Spalt voneinander getrennt sind, und
wobei der Spalt das Entkleben der ersten Klebung (106a, 406a) von der Ausbreitung auf die zweite Klebung (106, 106b, 406b) isoliert, und
wobei das Klebemittel (106, 116, 306, 406, 206a, 206b, 406) ein Hohlkehlenprofil an den Grenzflächenbereichen zwischen der ersten und der zweiten Verbundfaserschicht (104, 404) bildet.

2. Mehrschichtige Verbundstruktur nach Anspruch 1, bei der die erste Klebung (106a, 406a) und die zweite Klebung (106, 106b, 406b) ungleiche Breiten (20-25) aufweisen.

3. Mehrschichtige Verbundstruktur nach Anspruch 1 oder Anspruch 2, die ferner eine dritte Klebung (106c, 406c) umfasst, wobei die dritte Klebung (106c, 406c) von der zweiten Klebung (106, 106b, 406b) durch einen zweiten Spalt getrennt ist.

4. Mehrschichtige Verbundstruktur nach Anspruch 3, bei der der Spalt eine erste Spaltbreite aufweist und der zweite Spalt eine zweite Spaltbreite aufweist, die sich von der ersten Spaltbreite unterscheidet.

5. Mehrschichtige Verbundstruktur nach Anspruch 3 oder Anspruch 4, bei der die erste, zweite und dritte Klebung (106a, 106b; 106, 106b, 406b; 106c, 406c) jeweils ungleiche Breiten (20-25) aufweisen.

6. Mehrschichtige Verbundstruktur nach einem der obigen Ansprüche, bei der von erster Klebung (106a, 406a) oder zweiter Klebung (106, 106b, 406b) eine eine quadratische, eine kreisförmige oder eine dreieckige Form definiert.

7. Luftfahrzeug, das die mehrschichtige Verbund struktur nach einem der vorstehenden Ansprüche umfasst.

8. Verfahren zur Herstellung einer mehrschichtigen Verbundstruktur, mit den Schritten:
Vorbereiten einer ersten Oberfläche einer ersten Verbundfaserschicht (102, 402) zum Verkleben;
Vorbereiten einer zweiten Oberfläche einer zweiten Verbundfaserschicht (104, 404) zum Verkleben;
Aufbringen eines Klebemittels (106, 116, 306, 406, 206a, 206b, 406) als erste Klebung (106a, 406a) auf die erste Oberfläche oder die zweite Oberfläche;
Aufbringen von weiterem Klebemittel (106, 116, 306, 406, 206a, 206b, 406) als eine zweite Klebung (106a, 406b) auf die erste Oberfläche oder die zweite Oberfläche; und
Verkleben der ersten Verbundfaserschicht (102, 402) und der zweiten Verbundfaserschicht (104, 404) durch Kontaktieren der ersten Klebung (106a, 406a) und der zweiten Klebung (106, 106b, 406b) mit jeder der ersten Oberfläche und der zweiten Oberfläche,
wobei die erste und die zweite Klebung (106a, 106b, 406b) durch einen Spalt getrennt sind, der konfiguriert ist, um eine Entklebung der ersten Klebung (106a, 406a) von der Ausbreitung auf die zweite Klebung (106, 106b, 406b) zu isolieren, und
wobei das Klebemittel (106, 116, 306, 406, 206a, 206b, 406) ein Hohlkehlenprofil an den Grenzflächenbereichen zwischen der ersten und der zweiten Verbundfaserschicht (104, 404) bildet.

9. Verfahren nach Anspruch 8, ferner mit dem Schritt des Einbauens der mehrlagigen Verbundstruktur in eine Flugzeugstruktur (702).

10. Verfahren nach Anspruch 8 oder 9, bei dem die erste Klebung (106a, 406a) und die zweite Klebung (106, 106b, 406b) ungleiche Breiten (20-25) aufweisen.

11. Verfahren nach einem der Ansprüche 8 bis 10, ferner mit dem Schritt des Auftragens von weiterem Klebemittel (106, 116, 306, 406, 206a, 206b, 406) als dritte Klebung (106c, 406c) auf die erste Oberfläche oder die zweite Oberfläche vor dem Schritt des Verklebens der ersten Verbundfaserschicht (102, 402) und der zweiten Verbundfaserschicht (104, 404).

12. Verfahren nach Anspruch 11, bei dem die dritte Klebung (106c, 406c) von der zweiten Klebung (106, 106b, 406b) durch einen zweiten Spalt getrennt ist.

13. Verfahren nach Anspruch 12, bei dem der Spalt eine erste Spaltbreite aufweist und der zweite Spalt eine zweite Spaltbreite aufweist, die sich von der ersten Spaltbreite unterscheidet.

14. Verfahren nach Anspruch 11, bei dem die erste, zweite und dritte Klebung (106a, 406a; 106, 106b, 406b; 106c, 406c) jeweils ungleiche Breiten (20-25) aufweisen.

15. Verfahren nach einem der Ansprüche 8 bis 14, bei dem von erster Klebung (106a, 406a) oder zweiter Klebung (106b, 406b) eine eine quadratische, kreisförmige oder dreieckige Form definiert.

## Revendications

1. Structure composite multicouche comprenant :
une première couche de fibre composite (102, 402) ;
une seconde couche de fibre composite (104, 404) ; et
un agent de liaison (106, 116, 306, 406, 206a, 206b, 406) disposé entre les première et seconde couches de fibre composite (104, 404),
dans laquelle l'agent de liaison (106, 116, 306, 406, 206a, 206b, 406) forme une première liaison (106a, 406a) et une deuxième liaison (106, 106b, 406b) entre la première couche de fibre composite (102, 402) et la seconde couche de fibre composite (104, 404), les première et deuxième liaisons (106a, 106b, 406b) (106, 106b, 406b) étant séparées l'une de l'autre par un espace, et
dans laquelle l'espace isole une dissociation de la première liaison (106a, 406a) vis-à-vis d'une propagation vers la deuxième liaison (106, 106b, 406b), et
dans laquelle l'agent de liaison (106, 116, 306, 406, 206a, 206b, 406) forme un profil de congé de raccordement au niveau de régions interfaciales entre les première et seconde couches de fibre composite (104, 404).

2. Structure composite multicouche selon la revendication 1, dans laquelle la première liaison (106a, 406a) et la deuxième liaison (106, 106b, 406b) présentent des largeurs inégales (20-25).

3. Structure composite multicouche selon la revendication 1 ou la revendication 2, comprenant en outre une troisième liaison (106c, 406c), dans laquelle la troisième liaison (106c, 406c) est séparée de la deuxième liaison (106, 106b, 406b) par un second espace.

4. Structure composite multicouche selon la revendication 3, dans laquelle l'espace présente une première largeur d'espace et le second espace présente une seconde largeur d'espace différente de la première largeur d'espace.

5. Structure composite multicouche selon la revendication 3 ou la revendication 4, dans laquelle les première, deuxième et troisième liaisons (106a, 106b ; 106, 106b, 406b ; 106c, 406c) présentent chacune des largeurs inégales (20-25).

6. Structure composite multicouche selon l'une quelconque des revendications précédentes, dans laquelle l'une de la première liaison (106a, 406a) ou de la deuxième liaison (106, 106b, 406b) définit une forme carrée, circulaire ou triangulaire.

7. Véhicule aérien comprenant la structure composite multicouche selon l'une quelconque des revendications précédentes.

8. Procédé de formation d'une structure composite multicouche, comprenant les étapes consistant à :
préparer une première surface d'une première couche de fibre composite (102, 402) pour une liaison ;
préparer une seconde surface d'une seconde couche de fibre composite (104, 404) pour une liaison ;
appliquer un agent de liaison (106, 116, 306, 406, 206a, 206b, 406) en tant que première liaison (106a, 406a) sur la première surface ou sur la seconde surface ;
appliquer un agent de liaison supplémentaire (106, 116, 306, 406, 206a, 206b, 406) en tant que deuxième liaison (106, 106b, 406b) sur la première surface ou sur la seconde surface ; et
lier la première couche de fibre composite (102, 402) et la seconde couche de fibre composite (104, 404) en mettant en contact la première liaison (106a, 406a) et la deuxième liaison (106, 106b, 406b) avec chacune de la première surface et de la seconde surface,
dans lequel les première et deuxième liaisons (106a, 106b, 406b) (106, 106b, 406b) sont séparées par un espace configuré pour isoler une dissociation de la première liaison (106a, 406a) vis-à-vis d'une propagation vers la deuxième liaison (106, 106b, 406b), et
dans laquelle l'agent de liaison (106, 116, 306, 406, 206a, 206b, 406) forme un profil de congé de raccordement au niveau de régions interfaciales entre les première et seconde couches de fibre composite (104, 404).

9. Procédé selon la revendication 8, comprenant en outre l'incorporation de la structure composite multicouche dans une structure d'aéronef (702).

10. Procédé selon la revendication 8 ou 9, dans lequel la première liaison (106a, 406a) et la deuxième liaison (106, 106b, 406b) présentent des largeurs inégales (20-25).

11. Procédé selon l'une quelconque des revendications 8 à 10, comprenant en outre l'étape consistant à appliquer un agent de liaison supplémentaire (106, 116, 306, 406, 206a, 206b, 406) en tant que troisième liaison (106c, 406c) sur la première surface ou sur la seconde surface avant l'étape consistant à lier la première couche de fibre composite (102, 402) et la seconde couche de fibre composite (104, 404).

12. Procédé selon la revendication 11, dans lequel la troisième liaison (106c, 406c) est séparée de la deuxième liaison (106, 106b, 406b) par un second espace.

13. Procédé selon la revendication 12, dans lequel l'espace présente une première largeur d'espace et le second espace présente une seconde largeur d'espace différente de la première largeur d'espace.

14. Procédé selon la revendication 11, dans lequel les première, deuxième et troisième liaisons (106a, 406a ; 106, 106b, 406b ; 106c, 406c) présentent chacune des largeurs inégales (20-25).

15. Procédé selon l'une quelconque des revendications 8 à 14, dans lequel l'une de la première liaison (106a, 406a) ou de la deuxième liaison (106, 106b, 406b) définit une forme carrée, circulaire ou triangulaire.
